Europäisches Patentamt

European Patent Office

Office européen des brevets

(19)

(11) Numéro de publication : **0 063 085**
**B1**

# (12) FASCICULE DE BREVET EUROPÉEN

(45) Date de publication du fascicule du brevet :
**18.09.85**

(21) Numéro de dépôt : **82400656.3**

(22) Date de dépôt : **09.04.82**

(51) Int. Cl.⁴ : **G 02 B 6/36**

(54) **Connecteur pour fibres optiques et procédé pour sa réalisation.**

(30) Priorité : **09.04.81 FR 8107144**

(43) Date de publication de la demande :
**20.10.82 Bulletin 82/42**

(45) Mention de la délivrance du brevet :
**18.09.85 Bulletin 85/38**

(84) Etats contractants désignés :
**BE CH DE FR GB IT LI NL SE**

(56) Documents cités :
**GB-A- 2 058 392**
**US-A- 3 982 815**
**US-A- 4 236 787**
**INSTRUMENTS & CONTROL SYSTEMS, vol. 53, no. 5, mai 1980, pages 49-50, Radno, Pa. (USA); T. BOWEN et al.: "Reducing fiber optic connector problems".**
**REVIEW OF THE ELECTRICAL COMMUNICATION LABORATORIES, vol. 27, no. 11-12, novembre/décembre 1979, pages 999-1009, Tokyo (JP); N. SUZUKI et al.: "Demountable connectors for optical fiber transmission equipment".**

(73) Titulaire : **RADIALL INDUSTRIE, Société Anonyme dite:**
**101, rue Philibert Hoffmann Zone Industrielle Ouest F-93116 Rosny-Sous-Bois (FR)**

(72) Inventeur : **Despouys, Jean Bernard**
**4, rue Frédéric Mistral**
**F-75015 Paris (FR)**

(74) Mandataire : **Nony, Michel**
**29, rue Cambacérès**
**F-75008 Paris (FR)**

## Description

La présente invention est relative à un connecteur pour fibres optiques.

Actuellement la connexion de deux fibres optiques est généralement réalisée au moyen de connecteurs formés de deux embouts mâles montés à l'extrémité de chacune des fibres et d'un reccord femelle de reconstitution comportant un perçage longitudinal pour supporter et aligner les deux embouts face à face (cf. à titre d'exemple, GB-A-2 058 392).

On sait que pour obtenir une bonne connexion à faibles pertes il est nécessaire que le connecteur aligne parfaitement les deux fibres. Pour assurer cet alignement on positionne les embouts dans le perçage du raccord en appui par leur face latérale en appliquant des forces transversales. L'immobilisation longitudinale des embouts nécessite en plus l'application de forces longitudinales.

Les solutions technologiques pour réaliser de tels connecteurs en dosant le mieux possible les forces longitudinales et transversales à mettre en œuvre sont complexes et incompatibles avec la réalisation de connecteurs performants à un coût modéré. De plus les pressions de contact entre les embouts mâles et le raccord femelle font que des usures interviennent au cours des manœuvres d'accouplement et de désaccouplement. Les phénomènes d'usure altèrent progressivement l'alignement des fibres et peuvent être la source de pollution des faces optiques. De plus ces phénomènes d'usure limitent la durée de vie des connecteurs.

La présente invention vise à pallier les inconvénients des connecteurs actuellement connus en fournissant un connecteur de haute précision, permettant de réaliser des connexions optiques interchangeables en mettant en œuvre uniquement des forces longitudinales pour l'alignement et le positionnement des embouts mâles dans le raccord femelle. La présente invention se propose de plus de fournir un connecteur susceptible, par des moyens particulièrement simples, d'assurer simultanément une fonction d'atténuation avec un affaiblissement déterminé.

A cet effet la présente invention a pour objet un connecteur pour fibres optiques, caractérisé par le fait que le raccord femelle comporte dans sa partie centrale, à l'intérieur de son perçage longitudinal, un corps de butée pour les embouts mâles, présentant un orifice axial traversant et autour de celui-ci une portée de contact en regard de chacun des embouts mâles, chacun des embouts mâles présentant une protubérance tubulaire axiale susceptible de s'engager dans l'orifice dudit corps de butée et un conduit dans lequel la fibre optique peut être introduite avec jeu et immobilisée de manière que son extrémité coïncide avec l'extrémité de ladite protubérance, chacun des embouts comportant en outre, en retrait de ladite protubérance, et entourant la partie arrière de celle-ci, un évidement annulaire dont la paroi définit une portée de contact avec la portée en regard du corps de butée du raccord femelle, sous l'action de moyens de pression longitudinaux, les portées en regard dudit corps de butée dudit raccord femelle et de chacun des embouts mâles étant agencées de façon telle que, lors de tout mouvement relatif des portées en contact, l'extrémité d'une fibre au niveau de la face d'extrémité de la protubérance d'un embout mâle soit maintenue à une distance constante prédéterminée du centre dudit corps de butée.

Dans un premier mode de réalisation l'organe de butée du raccord femelle est une sphère, l'évidement annulaire de chaque embout mâle présentant une paroi de profil conique.

En variante de ce mode de réalisation on peut remplacer la sphère par un disque de même diamètre, des moyens de positionnement supplémentaires devant être prévus pour assurer l'orientation angulaire de chaque embout mâle par rapport au raccord femelle.

Dans un second mode de réalisation le corps de butée est cylindrique, l'évidement annulaire de chaque embout mâle présentant une paroi de profil sphérique, le corps cylindrique venant en appui contre les portées sphériques des embouts mâles par la périphérie de ses faces planes d'extrémité, les portées sphériques étant agencées de manière telle que les portées sphériques de deux embouts, en position d'accouplement, définissent une sphère dont le centre coïncide avec le centre du corps de butée cylindrique.

Dans un autre mode de réalisation le corps de butée est parallélépipédique, l'évidement annulaire de chaque embout mâle présentant une paroi de profil sphérique ou conique. L'orientation angulaire d'un embout mâle par rapport au raccord femelle peut par exemple être assurée en conférant des sections polygonales correspondantes aux protubérances des embouts mâles et à l'orifice axial du corps de butée.

Si l'on cherche à conférer au connecteur ainsi réalisé une capacité d'affaiblissement, de manière à ajouter une fonction d'atténuation, on comprend qu'il suffit de modifier le dimensionnement du corps sphérique d'alignement dans le premier mode de réalisation ou le rayon de la portée sphérique de chaque embout mâle dans le second mode de réalisation pour éloigner du centre du corps de butée les extrémités des fibres maintenues au niveau des extrémités des protubérances des embouts mâles. Cette solution est particulièrement intéressante lorsque le connecteur est utilisé dans une installation dont on veut amener le signal à un niveau déterminé.

La présente invention a également pour objet un procédé pour la réalisation d'un connecteur tel que décrit ci-dessus, caractérisé par le fait qu'on met en place une fibre optique dans un calibre comportant une pièce de butée présentant la forme d'un demi-corps de butée de raccord femelle, qu'on centre ladite fibre par rapport

2

à ladite pièce de butée et à un embout mâle mis en place dans ledit calibre, qu'on immobilise la fibre ainsi centrée dans l'embout maintenu dans ledit calibre, qu'on amène ensuite l'embout dans un second calibre comportant une pièce de butée présentant la forme d'un demi-corps de butée de raccord femelle, qu'on tronçonne et on polit l'extrémité de la fibre et dudit embout à une distance prédéterminée du centre de la pièce de butée du second calibre et qu'on met en place deux embouts mâles ainsi réalisés dans un raccord femelle jusqu'à amener en contact les portées en regard de chaque embout et du corps de butée du raccord femelle.

Dans un mode de mise en œuvre du procédé, pour réaliser l'étape de centrage d'une fibre par rapport à un embout mâle, on dispose un embout mâle dans un calibre, comportant une partie frontale présentant la forme d'un demi-raccord femelle, une partie centrale comportant une pièce de butée présentant la forme d'un demi-corps de butée de raccord femelle et une partie arrière de centrage de fibre, comportant de préférence une cavité en forme de dièdre rentrant, on dispose dans le conduit axial de l'embout une fibre optique et l'on centre la fibre optique par rapport à l'embout dans la partie arrière du calibre, notamment en la maintenant au fond dudit dièdre rentrant du calibre à l'aide d'un coin correspondant.

Une fois, la fibre centrée par rapport à l'embout mâle dans le calibre, on procède à son immobilisation dans l'embout avantageusement par injection d'une résine à travers un orifice prévu à cet effet dans la partie frontale du calibre, la fibre ainsi centrée se trouvant scellée dans l'embout lors du durcissement de la résine.

On utilise avantageusement un calibre constitué de trois parties assemblables, à savoir : une partie frontale présentant la forme d'un demi-raccord femelle, une partie centrale comportant une pièce de butée présentant la forme d'un demi-corps de butée de raccord femelle et une partie arrière de centrage de fibre comportant de préférence une cavité en forme de dièdre rentrant et, on effectue un préréglage du calibre consistant à mettre en place une fibre optique dans la partie arrière du calibre, à appliquer sur ladite partie arrière la partie centrale comportant la pièce de butée, à centrer ladite pièce de butée par rapport à la fibre optique par visée optique, notamment à l'aide d'une lunette auto-collimatrice, en déplaçant l'une par rapport à l'autre les parties centrale et arrière du calibre en appui mutuel, et à mettre en place sur la partie centrale du calibre la partie frontale de celui-ci.

En variante on peut utiliser un calibre d'un seul tenant.

La présente invention a également pour objet un second mode de mise en œuvre de procédé pour la réalisation d'un connecteur ayant les caractéristiques mentionnées, caractérisé par le fait qu'on introduit et on immobilise par des moyens de blocage mécanique, un fibre optique dans un embout mâle, qu'on positionne axialement l'extrémité de la fibre par rapport à l'embout mâle en introduisant l'ensemble dans un calibre comportant une pièce de butée présentant la forme d'un demi-corps de butée de raccord femelle, qu'on tronçonne et on polit l'extrémité de la fibre et de l'embout à une distance prédéterminée du centre de la pièce de butée du calibre, qu'on met en place l'embout muni de la fibre optique dans un second calibre présentant la forme d'un demi-raccord femelle et comportant une pièce de butée présentant la forme d'un corps de butée de raccord femelle, qu'on centre la fibre optique par rapport à ladite pièce de butée par visée optique, notamment à l'aide d'une lunette auto-collimatrice, en agissant sur lesdits moyens de blocage mécanique, et qu'on met en place deux embouts mâles ainsi réalisés dans un raccord femelle jusqu'à amener en contact les portées en regard de chaque embout et du corps de butée du raccord femelle.

Avantageusement, les moyens de blocage mécanique comportent une pluralité de billes métalliques logées à force dans des trous de l'embout mâle et susceptibles de s'appliquer contre un tube métallique central comportant un évidement dans lequel est immobilisée, notamment par collage, la fibre, ledit tube métallique réalisant la protubérance tubulaire axiale de l'embout mâle.

D'autres avantages et caractéristiques de l'invention seront mis en évidence dans la description qui suit en référence au dessin annexé dans lequel :

la figure 1 représente partiellement en coupe un premier mode de réalisation de connecteur selon l'invention,

la figure 2 représente partiellement en coupe un second mode de réalisation de connecteur selon l'invention,

la figure 3 est une vue en coupe d'un premier mode de réalisation de calibre pour la mise en place et le centrage d'une fibre dans un embout mâle d'un connecteur du mode de réalisation de la figure 1,

la figure 4 est une vue en coupe sleon IV-IV de la figure 3,

la figure 5 illustre la seconde phase de préparation de cet embout mâle, selon un premier mode de mise en œuvre,

la figure 6 illustre l'extrémité de l'embout mâle prêt à être introduit dans le raccord femelle,

la figure 7 représente un second mode de réalisation de calibre utilisable pour la mise en place et le centrage d'une fibre dans un embout mâle d'un connecteur du mode de réalisation de la figure 1,

la figure 8 représente très schématiquement une lunette autocollimatrice utilisable pour le préréglage du calibre selon la figure 7,

la figure 9 illustre la phase de préréglage du calibre de la figure 7 utilisant la lunette de la figure 8,

la figure 10 illustre l'image vue dans l'oculaire pendant la phase de préréglage du calibre de la figure 7,

la figure 11 est une vue analogue à celle de la figure 3 utilisant le calibre de la figure 7,

la figure 12 est une vue en coupe d'une variante du calibre illustré à la figure 5, pour la seconde phase de préparation d'un embout mâle,

la figure 13 est une vue en coupe d'une variante de réalisation d'embout mâle pour la réalisation du connecteur selon l'invention,

la figure 14 est une vue en coupe selon XIV-XIV de la figure 13,

la figure 15 illustre la phase de centrage d'une fibre dans un embout mâle selon la figure 13 utilisant la lunette de la figure 8,

la figure 16 illustre l'image vue dans l'oculaire de la lunette pendant la phase de centrage illustrée à la figure 15.

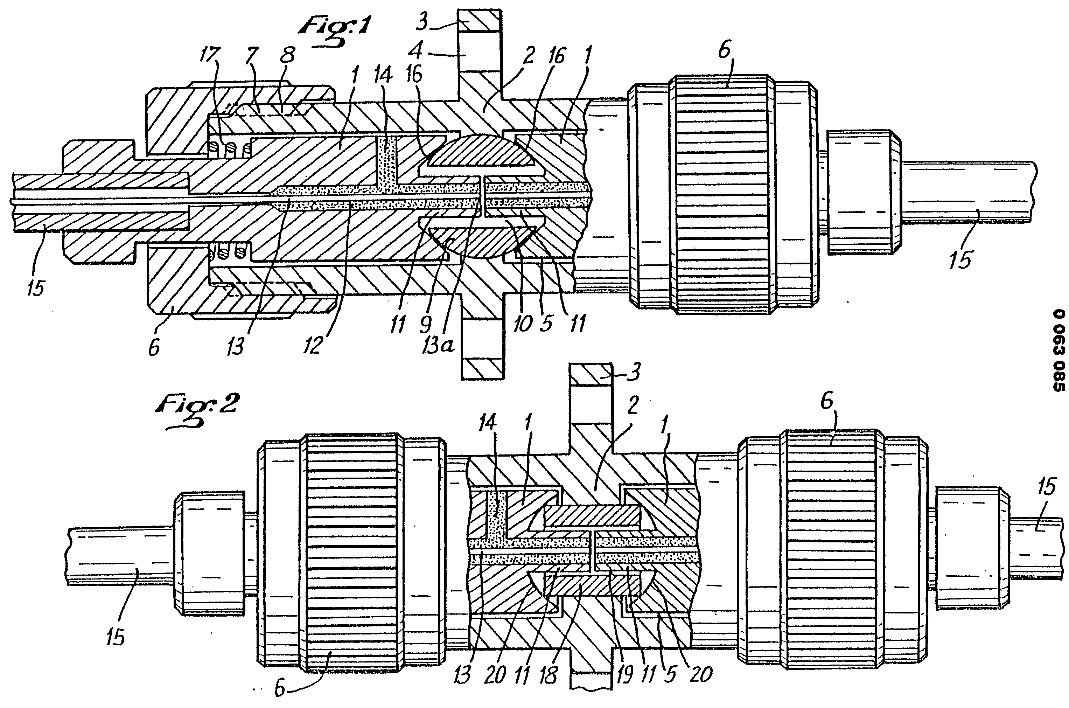

Le connecteur représenté à la figure 1 comporte d'une manière générale deux embouts mâles 1 disposés dans un raccord femelle 2 comportant un flasque central 3 muni de trous 4 pour sa fixation sur un panneau.

Les embouts mâles 1 sont disposés dans un perçage longitudinal 5 du raccord femelle et y sont verrouillés à l'aide de bagues 6 dont les filetages 7 coopèrent avec des filetages correspondants 8 des extrémités du raccord femelle 2.

Dans le perçage longitudinal 5 du raccord femelle, dans la zone centrale de celui-ci au niveau du flasque 3, est mise en place une sphère 9 munie d'un orifice axial traversant 10, cylindrique dans l'exemple illustré.

La sphère peut avantageusement être une bille en acier rectifiée, percée, une telle bille étant réalisable industriellement avec des tolérances de diamètre et de sphéricité inférieures au micromètre. La sphère est fixée par tous moyens appropriés par exemple par sertissage ou emmanchement dur à la paroi intérieure du raccord femelle dans sa zone centrale.

Il est également possible, dans le cas de connexions moins performantes de réaliser la sphère d'un seul tenant avec le raccord femelle, par des techniques conventionnelles de moulage ou de matriçage.

Chacun des embouts mâles 1 présente une protubérance tubulaire axiale 11 à l'extrémité frontale de laquelle débouche un conduit axial 12 à l'intérieur duquel une fibre optique 13 a été scellée au moyen d'une résine 14. La fibre optique 13 est immobilisée dans l'embout par la résine 14 et canalisée à l'arrière de l'embout par un câble tubulaire 15.

Chacun des embouts mâles 1 présente en retrait de la protubérance tubulaire 11 un évidement annulaire présentant une paroi de cavité de forme conique 16.

On voit dans la figure 1 que la portée tronconique ainsi définie 16 de chaque embout est en contact avec une portée sphérique de la sphère 9, l'appui de contact étant maintenu par des ressorts de compression 17 disposés entre chaque embout et la bague de verrouillage correspondante 6.

On conçoit que, du fait de la forme des portées en contact, l'une tronconique sur l'embout l'autre sphérique sur la sphère 9, on assure que l'extrémité 13a de chaque fibre optique au niveau de la face d'extrémité de la protubérance 11 de chacun des embouts mâles est constamment maintenue à une distance fixe prédéterminée du centre de la sphère 9, cette distance pouvant être maintenue très faible, voire nulle si l'on souhaite un contact bout à bout des fibres. Si par exmeple on augmente le diamètre de la sphère 9, on augmente la distance de l'extrémité 13a de chaque fibre du centre de la sphère offrant ainsi une capacité d'atténuation. La valeur de l'atténuation est donc facilement déterminée en fonction du diamètre de la sphère utilisée.

Du fait de la grande précision que l'on peut obtenir sur les caractéristiques dimensionnelles de la sphère, comme rappelé ci-dessus, il n'est pas nécessaire d'observer une précision excessive au niveau des portées tronconiques des embouts mâles, une précision de quelques degrés sur les angles de cône suffisant. De même il n'est pas nécessaire de respecter une très grande précision au niveau des parties cylindriques des embouts mâles et du raccord femelle, une précision de l'ordre de 0,1 millimètre suffisant.

Un connecteur réalisé selon l'invention présente en outre l'avantage d'une grande insensibilité aux chocs, les faces fonctionnelles d'accouplement, à savoir les portées en regard des embouts mâles et de la sphère du raccord femelle étant protégées. De plus il n'y a pratiquement pas de frottement lors des manœuvres d'accouplement ou de désaccouplement, d'où une usure négligeable et une bonne longévité des connecteurs en cours d'utilisation.

De plus l'étanchéité du connecteur est facile à réaliser.

Bien que l'on ait représenté dans le mode de réalisation de la figure 1 un connecteur optique à une seule fibre il est bien évident que l'on peut utiliser le même principe de connexion pour des câbles optiques à plusieurs fibres et de même on peut mettre en place plusieurs embouts dans un même connecteur.

L'orifice axial 10 de la sphère 9, dans le mode de réalisation à fibre unique est avantageusement cylindrique pour des questions de facilité d'usinage. Cependant cet orifice 10 peut présenter une forme quelconque, notamment polygonale, et comporter par exemple un dièdre rentrant lorsque l'on cherche à assurer une fonction complémentaire d'orientation angulaire des embouts, notamment lorsque la sphère 9 est remplacée par un disque, de même diamètre, disposé de manière telle qu'en coupe longitudinale on retrouve la disposition de la figure 1.

On se réfère maintenant à la figure 2 qui illustre un second mode de réalisation de connecteur selon l'invention, les parties identiques à celles du connecteur de la figure 1 portant les mêmes chiffres de référence.

Dans ce mode de réalisation la sphère 9 du premier mode de réalisation est remplacée par un cylindre 18 comportant un orifice axial traversant 19, l'évidement de chacun des embouts 1 présentant dans ce mode de réalisation une paroi de profil sphérique 20.

On se réfère maintenant aux figures 3 à 6 qui illustrent la préparation d'un embout mâle avant sa mise en place dans un raccord femelle, pour réaliser selon un premier mode de mise en œuvre le connecteur illustré à la figure 1.

On voit sur la figure 3 l'embout 1 muni de sa bague de verrouillage 6 mis en place à l'intérieur d'un premier calibre, d'un seul tenant, comportant une partie avant 21a, une partie centrale 21b et une partie arrière 22. La partie avant 21a reproduit les caractéristiques d'un demi-raccord femelle destiné à coopérer avec l'embout mâle et se prolonge par une partie centrale 21b comportant une demi-sphère 23 de même dimension que la sphère 9 du raccord munie d'un orifice axial 24, la disposition relative de l'embout dans le calibre reproduisant identiquement les conditions de l'accouplement ultérieur de l'embout dans le raccord, la portée tronconique 16 étant appliquée sur la portée correspondante de la demi-sphère 23 sous l'action du ressort de compression 17.

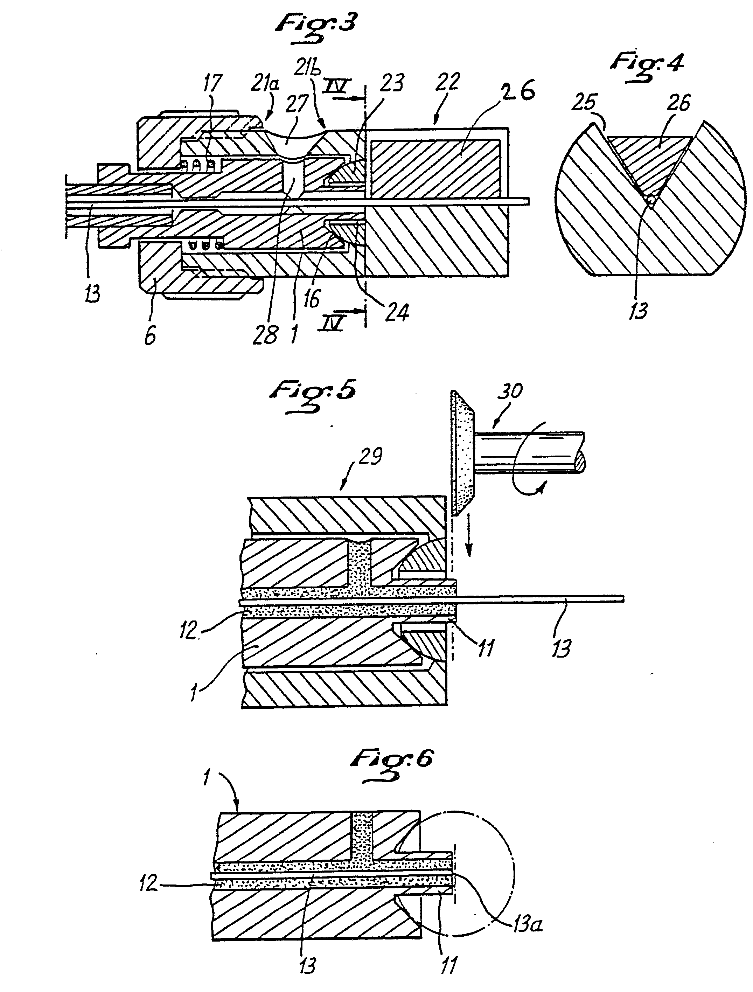

La partie arrière 22 du calibre comporte, comme on le voit le mieux sur la figure 4 une cavité en forme de dièdre rentrant 25 dans laquelle peut venir s'engager une pièce en forme de coin 26.

La conformation du calibre est telle que lorsqu'une fibre optique 13 se trouve au fond de la cavité 25 en appui par le coin 26 elle se trouve parfaitement centrée par rapport à la portée tronconique de l'embout et à la demi-sphère 23 dans la partie centrale du calibre 21b.

Il suffit donc, pour obtenir le centrage de la fibre dans l'embout, de mettre en place une fibre dans l'embout immobilisé dans le calibre et d'appliquer la pièce 26 de façon à amener la fibre 13 dans la partie 22 du calibre au fond de la gorge 25. On procède alors à une injection de résine à travers un orifice en forme d'entonnoir 27 ménagé à cet effet dans la partie avant du calibre 21a, cet orifice étant aligné avec un orifice 28 de l'embout mâle.

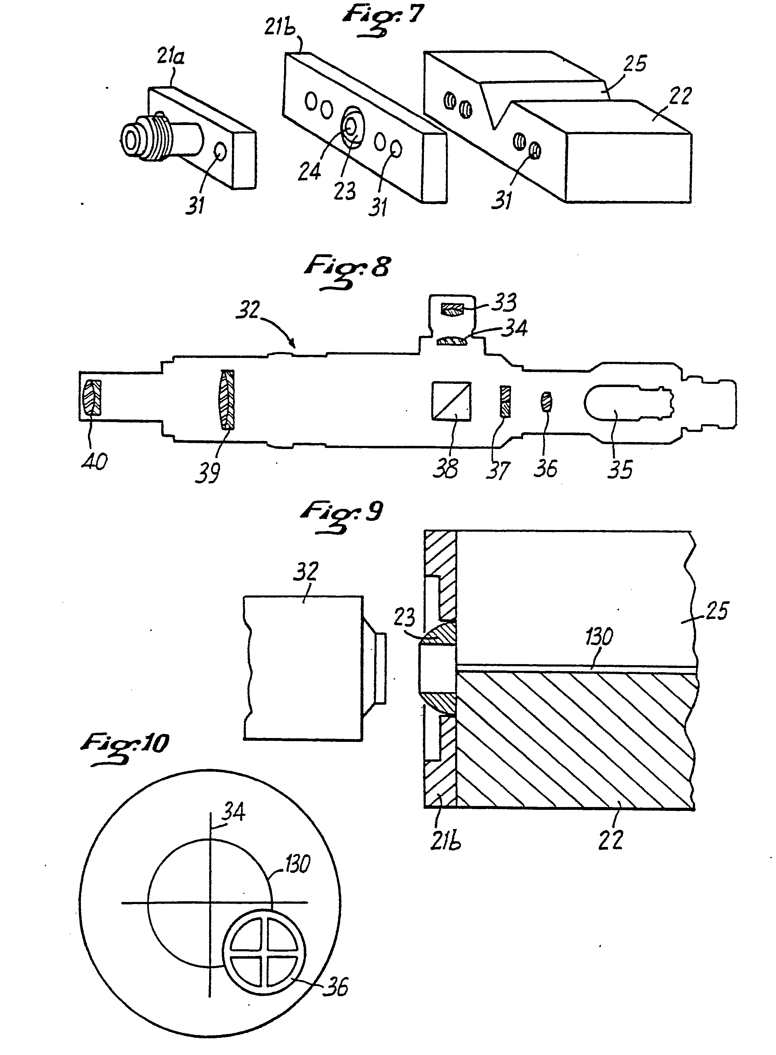

On dispose alors l'embout dans lequel la fibre 13 a été scellée par la résine 14 dans un second calibre 29 qui, comme on le voit sur la figure 5 présente les mêmes caractéristiques que la partie avant 21 du calibre illustré sur la figure 3. Une fois l'embout maintenu dans le calibre 29, de la même manière qu'il a été maintenu dans la partie avant 21a du calibre de la figure 3 on procède à un tronçonnage et un polissage à l'aide d'une meule abrasive 30 qui vient araser la fibre optique 13 et l'extrémité de la protubérance 11 de l'embout mâle 1 de manière telle que l'extrémité de la fibre se trouve dans un plan transversal en arrière, d'une distance prédéterminée, par exemple de quelques micromètres à quelques dizaines de micromètres suivant la dimension de la fibre à connecter et l'atténuation admissible dans la connexion, du centre de la demi-sphère prévue dans le calibre 29.

Cette disposition est illustrée dans la figure 6 qui représente l'embout terminé et dans laquelle on a schématisé en traits interrompus d'une part la sphère du raccord femelle et d'autre part le plan transversal diamétral de celle-ci parallèle à l'extrémité de la protubérance 11 et donc de l'extrémité 13a de la fibre optique.

Dans la pratique lorsqu'une atténuation très faible est souhaitée la distance entre l'extrémité 13a de la fibre et le centre de la sphère est de 0,01 à 0,05 fois le diamètre du cœur de la fibre.

Pour assembler le connecteur il suffit de mettre en place dans un raccord femelle deux embouts mâles tels qu'illustrés à la figure 6 jusqu'à obtenir la configuration de la figure 1 où les portées tronconiques des embouts mâles sont en contact avec les portées sphériques de la sphère montée à l'intérieur du raccord femelle.

Le calibre illustré dans la figure 7 présente dans l'ensemble une structure très similaire à celle du calibre illustré à la figure 3 à l'exception du fait que ses divers composants sont répartis en trois parties séparables, à savoir une partie frontale 21a présentant la forme d'un demi-raccord femelle, une partie centrale 21b comportant une pièce de butée présentant la forme d'un demi-corps de butée de raccord femelle, dans le cas représenté une demi-sphère 23 munie d'un orifice axial 24, et une partie arrière 22 comportant une cavité en forme de dièdre rentrant 25. Des orifices 31 sont prévus dans les trois parties du calibre pour le passage de tiges de verrouillage permettant d'immobiliser en position les trois parties du calibre.

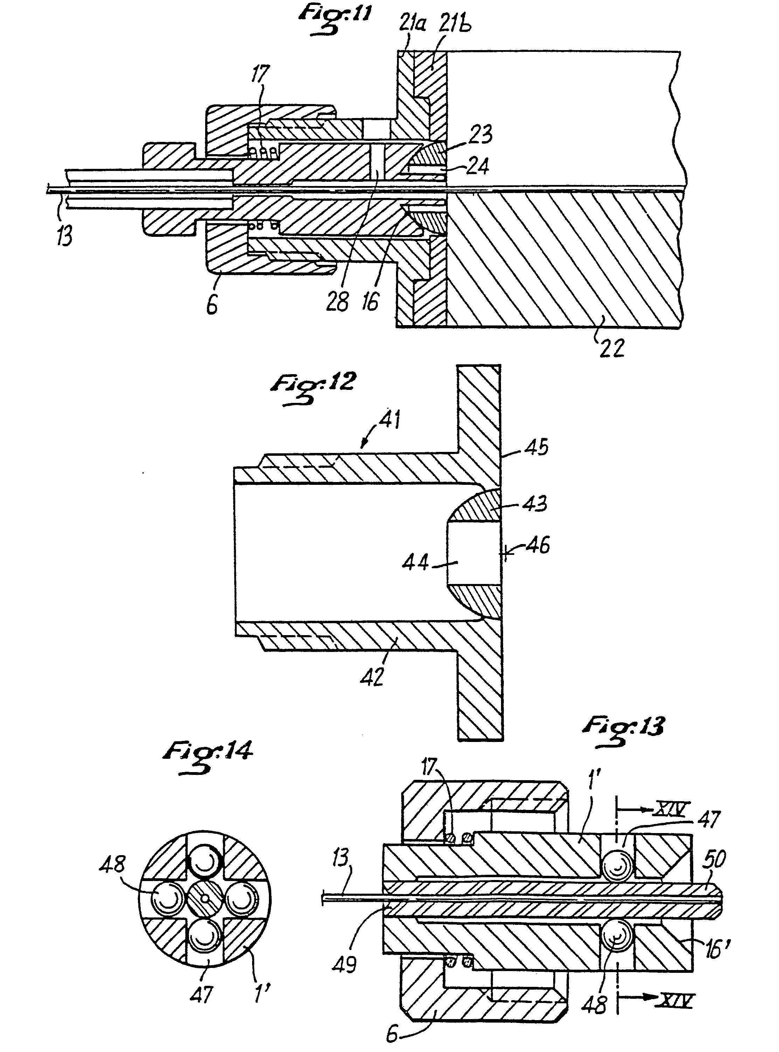

Le calibre à l'état assemblé est illustré à la figure 11, les éléments identiques ou ayant une fonction similaire à ceux du calibre de la figure 3 portant les mêmes chiffres de référence. Pour assurer le préréglage d'un tel calibre on utilise une lunette auto-collimatrice 32 telle que celle illustrée à la figure 8.

Celle-ci comporte un oculaire 33, un réticule d'oculaire 34, une lampe 35 dont la lumière traverse un condenseur 36, un réticule source 37, un séparateur 38 et un objectif 39.

En plus de ces composants qui sont les composants d'une lunette auto-collimatrice traditionnelle il est prévu selon l'invention de disposer en avant de l'objectif de la lunette un objectif 40 analogue à un objectif de microscope. Cet objectif 40 a pour fonction de faire converger à son foyer, extérieur à la lunette, les rayons parallèles parvenant depuis l'objectif 39.

Ainsi si l'on place au foyer de l'objectif 40 le centre d'une bille sphérique dont la surface est réfléchissante, l'image du réticule source est reformée dans l'oculaire.

Le décalage entre l'image du réticule source 36 et le réticule oculaire 34 est approximativement proportionnel à la distance du centre de la sphère réfléchissante ainsi placée et l'axe optique de la lunette auto-collimatrice. On peut ainsi visualiser la position d'une sphère réfléchissante par rapport à l'axe de la lunette.

On peut ainsi utiliser une telle lunette pour le centrage de la demi-sphère 23 de la partie cen-

trale du calibre de la figure 7 sur sa partie arrière 22.

A cet effet, on assemble comme illustré à la figure 9 la partie centrale 21b et la partie arrière 22 en face de l'objectif de la lunette auto-collimatrice 32. UN tronçon de fibre optique 130, dont l'extrémité a été soigneusement préparée, est placé dans la cavité 25 de la partie 22 du calibre de telle manière que sa face d'extrémité coïncide avec la face de la partie 22 en appui contre la partie 21b.

On centre la lunette auto-collimatrice sur la face de la fibre afin d'avoir l'image de cette face bien centrée sur le réticule oculaire 34.

On obtient également dans l'oculaire l'image du réticule source 36 figurant la position du centre de la demi-sphère percée 23.

Il suffit alors de déplacer la partie 21b par glissement plan sur plan à l'aide de micro-déplacements ou de chocs jusqu'à amener l'image du réticule source 36 au centre de la fibre 13 et du réticule oculaire 34.

On peut grâce à une telle visée optique obtenir des précisions de l'ordre du micro-mètre.

La demi-sphère 23 étant ainsi centrée, on complète le calibre comme illustré à la figure 11, avec la partie frontale 21a.

Après avoir utilisé ce calibre pour centrer une fibre 13 dans un embout mâle comme décrit précédemment pour le mode de réalisation de la figure 3, on procède à l'arasage et au polissage de l'extrémité de l'embout mâle et de la fibre, soit en utilisant le calibre illustré à la figure 5, soit le calibre illustré à la figure 12.

Ce calibre 41 comporte un corps 42 analogue à un demi-raccord femelle et un corps de butée, dans le cas présent, une demi-sphère 43 munie d'un perçage longitudinal 44 et dressée dans un plan 45 en retrait de quelques micromètres, par exemple de l'ordre de 3 à 4 micromètres par rapport à son centre 46.

Après mise en place de l'embout dans ce calibre 41, et pollissage contre une surface abrasive, on obtient un positionnement axial de la fibre par rapport à l'embout mâle analogue à celui représenté à la figure 6.

La calibre représenté à la figure 12 peut également être utilisé dans une variante de procédé de réalisation de connecteur selon l'invention illustrée aux figures 13 à 16.

On utilise à cet effet un embout mâle tel qu'illustré à la figure 13 comportant un corps d'embout 1' muni à son extrémité d'un évidement annulaire à paroi conique 16', le corps d'embout 1' comportant une pluralité de trous radiaux 47 pour un montage à force de billes 48.

Dans l'exemple illustré, il est prévu quatre billes 48 logées dans des trous correspondants disposés en croix.

L'embout comporte en outre un élément intérieur tubulaire notamment en acier, 49, dont l'extrémité 50 correspond à la protubérance 11 du mode de réalisation de la figure 1.

Pour la réalisation d'un connecteur selon l'invention avec de tels embouts mâles, on monte une fibre 13 dans la pièce tubulaire 49 en l'immobilisant par collage.

On réalise ensuite le positionnement longitudinal de l'extrémité 50 de la pièce 49 et de la fibre 13 par rapport à l'évidement annulaire conique 16' en utilisant un calibre tel que celui représenté à la figure 12.

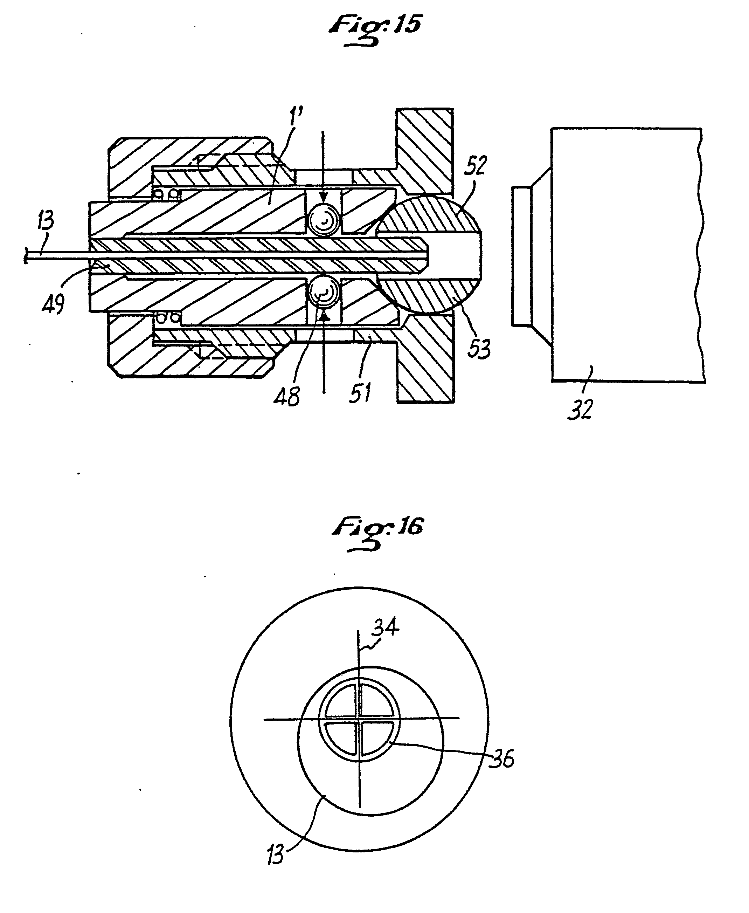

Pour le centrage de la fibre par rapport à l'embout mâle, on utilise un calibre tel qu'illustré à la figure 15 comportant un corps 51 reproduisant les caractéristiques d'un demi-raccord femelle et une sphère 52 munie d'un perçage longitudinal 53, l'embout monté dans le calibre étant placé devant l'objectif d'une lunette auto-collimatrice 32.

La lunette auto-collimatrice est mise au point sur la sphère 52 afin que l'image du réticule source 36 figurant la sphère soit centrée sur le réticule oculaire 34 comme on le voit dans la figure 16.

On obtient simultanément dans l'oculaire l'image de la face de la fibre optique 13 décentrée par rapport au réticule oculaire 34.

On agit alors sur les billes 48 comme illustré sur la figure 15 au moyen d'un dispositif micrométrique ou à chocs (non représenté) dans le sens des flèches matérialisées sur la figure 15 pour corriger la position de la fibre contenue dans la pièce tubulaire 49 par rapport au centre de la sphère 52, la position de centrage définitive étant obtenue lorsque l'image de la fibre 13 dans l'oculaire se trouve centrée par rapport aux réticules 34 et 36.

Tant dans ce mode de réalisation que dans les modes de réalisation précédemment décrits, on peut procéder à un contrôle de chaque embout mâle terminé en utilisant la lunette auto-collimatrice 32 après avoir mis en place l'embout dans un calibre analogue au calibre 51, la lunette auto-collimatrice étant alors mise au point sur la face de la fibre. L'image du réticule source qui figure le centre de la sphère donne par sa position par rapport au réticule oculaire, qui peut alors être gradué, la position du centre de la sphère par rapport au centre de la fibre, la précision étant de l'ordre du micromètre.

## Revendications

1. Connecteur pour fibres optiques comportant deux embouts (1) mâles montés à l'extrémité de chacune des fibres à connecter et un raccord femelle (2) de reconstitution comportant un perçage longitudinal (5) pour supporter et aligner les deux embouts face à face, caractérisé par le fait que le raccord femelle (2) comporte dans sa partie centrale, à l'intérieur de son perçage longitudinal, un corps de butée (9 ; 18) pour les embouts mâles, présentant un orifice axial traversant (10 ; 19) et autour de celui-ci une portée de contact en regard de chacun des embouts mâles, chacun des embouts mâles présentant une protubérance tubulaire axiale (11) susceptible de s'engager dans l'orifice dudit corps et un conduit (12) dans lequel la fibre optique (13) peut être introduite avec jeu et immobilisée de manière que son extrémité coïncide avec l'extrémité de ladite protubérance, chacun des embouts comportant en outre en retrait de ladite protubérance, et entourant la partie arrière de celle-ci, un évidement annulaire dont la paroi définit une portée de contact (16 ; 20) avec la portée en regard du corps de butée du raccord femelle sous l'action de moyens de pression longitudinaux (17), les portées en regard dudit corps de butée dudit raccord femelle et de chacun des embouts mâles étant agencées de façon telle que lors de tout mouvement relatif des portées en contact l'extrémité d'une fibre au niveau de la face d'extrémité de la protubérance d'un embout mâle soit maintenue à une distance constante prédéterminée du centre dudit corps de butée.

2. Connecteur selon la revendication 1 caractérisé par le fait que l'organe de butée est une sphère (9), l'évidement annulaire de chaque embout mâle présentant une paroi de profil conique (16).

3. Connecteur selon la revendication 1 caractérisé par le fait que le corps de butée est cylindrique (18), l'évidement annulaire de chaque embout mâle présentant une paroi de profil sphérique (20).

4. Connecteur selon l'une quelconque des revendications 1 à 3 caractérisé par le fait que les embouts mâles et le perçage longitudinal au raccord femelle sont cylindriques.

5. Connecteur selon la revendication 1 caractérisé par le fait que l'organe de butée du raccord femelle est un disque, l'évidement annulaire de chaque embout mâle d'extrémité présentant une paroi de profil conique.

6. Procédé pour réaliser un connecteur selon l'une quelconque des revendications précédentes, caractérisé par le fait qu'on met en place une fibre optique (13) dans un calibre comportant une pièce de butée (23) présentant la forme d'un demi-corps de butée de raccord femelle, qu'on centre ladite fibre par rapport à ladite pièce de butée et à un embout mâle (1) mis en place dans ledit calibre, qu'on immobilise la fibre ainsi centrée dans l'embout maintenu dans ledit calibre, qu'on amène ensuite l'embout dans un second calibre (29 ; 41) comportant une pièce de butée présentant la forme d'un demi-corps de butée de raccord femelle, qu'on tronçonne et qu'on polit l'extrémité de la fibre et dudit embout à une distance prédéterminée du centre de la pièce de butée du second calibre et qu'on met en place deux embouts ainsi réalisés dans un raccord femelle jusqu'à amener en contact les portées en regard de chaque embout et du corps de butée du raccord femelle.

7. Procédé selon la revendication 6, caractérisé par le fait que pour réaliser l'étape de centrage d'une fibre par rapport à un embout mâle, on dispose un embout mâle (1) dans un calibre, comportant une partie frontale (21a), présentant la forme d'un demi-raccord femelle, une partie centrale (21b) comportant une pièce de butée (23) présentant la forme d'un demi-corps de butée de raccord femelle et une partie arrière (22) de centrage de fibre, comportant de préférence une cavité en forme de dièdre rentrant (25), on dispose dans le conduit axial de l'embout une fibre optique et l'on centre la fibre optique par rapport à l'embout dans la partie arrière du calibre, notamment en la maintenant au fond dudit dièdre rentrant du calibre à l'aide d'un coin correspondant (26).

8. Procédé selon l'une quelconque des revendications 6 et 7, caractérisé par le fait qu'une fois la fibre centrée par rapport à l'embout mâle dans le calibre, on procède à son immobilisation dans l'embout, par injection d'une résine (14) à travers un orifice prévu à cet effet dans la partie frontale du calibre.

9. Procédé selon l'une quelconque des revendications 6 à 8, caractérisé par le fait qu'on utilise un calibre constitué de trois parties assemblables, à savoir : une partie frontale (21a) présentant la forme d'un demi-raccord femelle une partie centrale (21b) comportant une pièce de butée (23) présentant la forme d'un demi-corps de butée de raccord femelle et une partie arrière (22) de centrage de fibre, comportant de préférence une cavité en forme de dièdre rentrant (25), et qu'on effectue un préréglage du calibre consistant à mettre en place une fibre optique (130) dans la partie arrière du calibre, à appliquer sur ladite partie arrière du calibre la partie centrale comportant la pièce de butée, à centrer ladite pièce de butée par rapport à la fibre optique par visée optique, notamment à l'aide d'une lunette auto-collimatrice (32) en déplaçant l'une par rapport à l'autre les parties centrale et arrière du calibre en appui mutuel, et à mettre en place, sur la partie centrale du calibre, la partie frontale de celui-ci.

10. Procédé selon l'une quelconque des revendications 6 à 8, caractérisé par le fait qu'on utilise un calibre d'un seul tenant.

11. Procédé pour réaliser un connecteur selon l'une quelconque des revendications 1 à 5, caractérisé par le fait qu'on introduit et on immobilise, par des moyens de blocage mécanique (48, 49), une fibre optique dans un embout mâle, qu'on positionne axialement l'extrémité de la fibre par rapport à l'embout mâle en introduisant l'ensemble dans un calibre comportant une pièce de butée présentant la forme d'un demi-corps de butée de raccord femelle, qu'on tronçonne et qu'on polit l'extrémité de la fibre et de l'embout à une distance prédéterminée du centre de la pièce de butée du calibre, qu'on met en place l'embout muni de la fibre optique dans un second calibre présentant la forme d'un demi-raccord femelle et comportant une pièce de butée (52) présentant la forme d'un corps de butée de raccord femelle, qu'on centre la fibre optique par rapport à ladite pièce de butée par visée optique, notamment à l'aide d'une lunette auto-collimatrice (32) en agissant sur lesdits moyens de blocage mécanique et qu'on met en place deux embouts mâles ainsi réalisés dans un raccord femelle jusqu'à amener en contact les portées en regard de chaque embout et du corps de butée du raccord femelle.

12. Procédé selon la revendication 11, caractérisé par le fait que les moyens de blocage mécanique comportent une pluralité de billes métalliques (48) logées à force dans des trous (47) de l'embout mâle et susceptibles de s'appliquer contre un tube métallique central (49) comportant un évidement dans lequel est immobilisée, notamment par collage la fibre, ledit tube métallique réalisant la protubérance tubulaire axiale de l'embout mâle.

## Claims

1. A connector for optical fibres including two male ferrules (1) mounted at the end of each of the fibres which are to be connected and a female reconstituting connector (2) having a longitudinal bore (5) for supporting and aligning the two ferrules face to face, characterized in that the female connector (2) has in the central portion of it inside its longitudinal bore an abutment body (9 ; 18) for the male ferrules, which exhibits an axial orifice (10 ; 19) passing through it and round the latter a bearing surface opposite each of the male ferrules, each of the male ferrules exhibiting a tubular axial protuberance (11) capable of engaging in the orifice in the said body and a passage (12) into which the optical fibre (13) may be introduced with clearance and fixed in such a way that the end of it coincides with the end of the said protuberance, each of the ferrules including in addition, set back from the said protuberance and surrounding the rear portion of it, an annular recess of the wall of which defines a bearing surface (16 ; 20) for contact with the opposing bearing surface of the abutment body in the female connector under the action of longitudinal pressure-means (17), the opposing bearing surfaces of the said abutment body of the female connector and of each of the male ferrules being arranged in such a way that at the time of any relative movement of the bearing surfaces in contact the end of a fibre at the level of the endface of the protuberance from a male ferrule is kept at a constant predetermined distance from the centre of the said abutment body.

2. A connector as in Claim 1, characterized in that the abutment body is a sphere (9), the annular recess in each male ferrule exhibiting a wall of conical profile (16).

3. A connector as in Claim 1, characterized in that the abutment body is cylindrical (18), the annular recess in each male ferrule exhibiting a wall of spherical profile (20).

4. A connector as in any one of the Claims 1 to 3, characterized in that the male ferrules and the longitudinal bore of the female connector are cylindrical.

5. A connector as in Claim 1, characterized in that the abutment body in the female connector is a disc, the annular recess in each male terminal ferrule exhibiting a wall of conical profile.

6. A method of producing a connector as in any one of the preceding Claims, characterized in that an optical fibre (13), is put into position in a jig which includes an abutment piece (23) exhibiting the form of half an abutment body from a female connector, that the said fibre is centred with respect to the said abutment piece and to a male ferrule (1) put into position in the said jig, that the fibre so centred is fixed in the ferrule being held in the said jig, that the ferrule is then brought into a second jig (29 ; 41) which includes an abutment piece exhibiting the form of half an abutment body from a female connector, that the ends of the fibre and of the said ferrule are cut off and polished at a predetermined distance from the centre of the abutment piece of the second jig and that two ferrules so produced are put into position in a female connector until the opposing bearing surfaces of each ferrule and of the abutment body of the female connector are brought into contact.

7. A method as in Claim 6, characterized in that to carry out the stage of centreing a fibre with respect to a male ferrule, a male ferrule (1) is arranged in a jig which includes a front portion (21a) exhibiting the form of half a female connector, a central portion (21b) including an abutment piece (23) exhibiting the form of half an abutment body from a female connector and a rear fibre-centreing portion (22) which preferably includes a cavity the shape of a re-entrant dihedron (25), an optical fibre is arranged in the axial passage in the ferrule and the optical fibre is centred with respect to the ferrule in the rear portion of the jig, in particular whilst keeping it at the bottom of the said re-entrant dihedron of the jig by means of a corresponding wedge (26).

8. A method as in either of the Claims 6 and 7, characterized in that once the fibre has been centred with respect to the male ferrule in the jig, one proceeds to fixing it in the ferrule by injection of a resin (14) through an orifice provided for this purpose in the front portion of the jig.

9. A method as in any one of the Claims 6 to 8, characterized in that a jig is employed, which consists of three portions which can be fitted together, namely : a front portion (21a) exhibiting the form of half a female connector, a central portion (21b) including an abutment piece (23) exhibiting the form of half an abutment body from a female connector and a rear fibre-centreing portion (22) which preferably includes a cavity the shape of a re-entrant dihedron (25) and that a preadjustment of the jig is carried out, which consists in putting an optical fibre (130) in place in the rear portion of the jig, in fitting onto the said rear portion of the jig the central portion including the abutment piece, in centreing the said abutment piece with respect to the optical fibre by optical aiming, in particular by means of an autocollimating telescope (32) whilst moving the central and rear portions of the jig with respect to one another in contact with one another, and in putting the front portion of the jig in place on the central portion of it.

10. A method as in any one of the Claims 6 to 8, characterized in that a one-piece jig is employed.

11. A method of producing a connector as in any one of the Claims 1 to 5, characterized in that optical fibre is introduced into a male ferrule and fixed by mechanical locking means (48, 49), that the end of the fibre is positioned axially with respect to the male ferrule by introducing the whole into a jig which includes an abutment piece exhibiting the form of half an abutment body from a female connector, that the ends of the fibre and of the ferrule are cut off and polished at a predetermined distance from the centre of the abutment piece on the jig, that the ferrule equipped with the optical fibre is put in position in a second jig exhibiting the form of half a female connector and including an abutment piece (52) which exibits the form of an abutment body from a female connector, that the optical fibre is centred with respect to the said abutment piece by optical aiming, in particular by means of an autocollimating telescope (32) whilst acting upon the said mechanical locking means and that two male ferrules so produced are put into position in a female connector until the opposing bearing surfaces of each ferrule and of the abutment body of the female connector are brought into contact.

12. A method as in Claim 11, characterized in that the mechanical locking means include a plurality of metal balls (48) seated in holes (47) in the male ferrule by force and capable of being applied against a central metal tube (49) which includes a recess in which the fibre is fixed, in particular by gluing, the said metal tube creating the tubular axial protuberance from the male ferrule.

**Patentansprüche**

1. Verbindung für optische Fasern, welche aus zwei bolzenförmigen Halterungen (1), von denen jede an einem der Enden der zu verbindenden Fasern aufmontiert ist, und einer lösbaren Verbindermuffe (2) besteht, die in ihrem Innenraum (5) die Halterungen umfaßt und in Längsrichtung frontal zueinander fluchtet, dadurch gekennzeichnet, daß die Verbindermuffe im zentralen Bereich des Innenraumes einen Anschlagkörper (9 ; 18) für die bolzenförmigen Halterungen aufweist, der mit einer durchgehenden axialen Öffnung (10 ; 19) versehen ist, um die herum sich Kontaktflächen als Anschlag für die Halterungen erstrecken, daß jede der Halterungen einen axial vorspringenden Ansatz (11) trägt, der in die Öffnung des Anschlagkörpers hineinragt, und daß die Halterungen eine Bohrung (12) aufweisen, in welche die Faser mit Spiel einsetzbar und so fixierbar ist, daß ihr Ende mit dem Ende des Ansatzes zusammenfällt, daß jede Halterung eine gegenüber ihrem Ansatz zurückversetzte ringförmige Ausnehmung aufweist, welche um das hintere Ende des Ansatzes herum verläuft und deren Wandung eine Kontaktfläche (16 ; 20) definiert die mit der zugeordneten Kontaktfläche am Anschlagkörper unter der Wirkung eines eine longitudinale Druckkraft ausübenden Organs (17) zusammenwirkt, wobei die Kontaktflächen am Anschlagkörper der Verbindermuffe einerseits und an den bolzenförmigen Halterungen andererseits so angeordnet sind, daß bei jeder Relativbewegung der in Kontakt befindlichen Flächen das Ende der Faser im Bereich der Stirnfläche des Ansatzes der jeweiligen Halterung in einem konstanten Abstand vom Zentrum des Anschlagkörpers bleibt.

2. Verbindung nach Anspruch 1, dadurch gekennzeichnet, daß der Anschlagkörper eine Kugel (9) ist, und daß die ringförmige Ausnehmung an jeder der bolzenförmigen Halterungen eine im Profil konische Wandung (16) aufweist.

3. Verbindung nach Anspruch 1, dadurch gekennzeichnet, daß der Anschlagkörper (18) die Form eines Zylinders hat, und daß die ringförmige Ausnehmung jeder der bolzenförmigen Halterungen eine Wandung mit sphärischem Profil (20) aufweist.

4. Verbindung nach einem der Ansprüche 1 bis 3, dadurch gekennzeichnet, daß die bolzenförmigen Halterungen und die Form des longitudinalen Innenraumes der Verbindermuffe zylindrisch ausgebildet sind.

5. Verbindung nach Anspruch 1, dadurch gekennzeichnet, daß der Anschlagkörper der Muffe eine Scheibe ist, wobei die ringförmige Ausnehmung an jeder der bolzenförmigen Halterungen eine Wandung konischen Profils aufweist.

6. Verfahren zum Herstellen einer Verbindung nach einem der vorhergehenden Ansprüche, dadurch gekennzeichnet, daß eine optische Faser (13) in ein Kaliber eingeführt wird, welches mit einem Anschlagkörper (23) versehen ist, der die Form einer Anschlagkörperhälfte der Verbindermuffe aufweist, daß eine bolzenförmige Halterung (1) im Kaliber in Stellung gebracht wird, daß eine Faser in bezug auf den Anschlagkörper und die bolzenförmige Halterung zentriert wird, daß die so zentrierte Faser im vorgenannten Kaliber fixiert wird, daß dann die Halterung in ein zweites Kaliber (29 ; 41) eingeführt wird, welches mit einem Anschlagkörper versehen ist, der die Form einer Anschlagkörperhälfte der Verbindermuffe aufweist, daß dann das Ende der Faser und der Halterung durch Trennschleifen und Polieren bis zum Erreichen eines vorgegebenen Abstandes vom Zentrum des Anschlagkörpers des zweiten Kalibers bearbeitet werden, daß dann die so behandelten Halterungen in eine Verbindermuffe eingeführt werden, bis daß die Kontaktflächen der Halterungen mit den zugehörigen Kontaktflächen des Anschlagkörpers zum gegenseitigen Anliegen kommen.

7. Verfahren nach Anspruch 6, dadurch gekennzeichnet, daß zur Durchführung der Zentrierung einer optischen Faser in bezug auf eine Halterung diese Halterung (1) in ein Kaliber eingeführt wird, das ein vorderes Teil (21a) in Form einer Verbindermuffenhälfte, ein zentrales Teil (21b) mit einem Anschlagkörper (23) in Form einer Anschlagkörperhälfte der Verbindermuffe und ein hinteres Teil (22) zum Zentrieren der Faser aufweist, welches vorzugsweise mit einer Ausnehmung in Form einer Keilnut (25) versehen ist, daß in die axiale Bohrung der Halterung eine Faser eingeführt wird und daß die optische Faser in bezug auf die Halterung im hinteren Teil des Kalibers zentriert wird, indem sie beispielsweise auf dem Grund der Keilnut mit Hilfe eines entsprechenden Keiles (26) festgehalten wird.

8. Verfahren nach einem der Ansprüche 6 und 7, dadurch gekennzeichnet, daß nach dem Zentrieren der Faser in bezug auf die im Kaliber befindliche Halterung die Fixierung in der Halterung durch Einspritzen eines Harzes (14) durch eine Öffnung vorgenommen wird, die zu diesem Zweck im vorderen Teil des Kalibers vorgesehen ist.

9. Verfahren nach einem der vorhergehenden Ansprüche 6 bis 8, dadurch gekennzeichnet, daß ein Kaliber verwendet wird, welches aus drei miteinander zu verbindenden Teilen, nämlich einem Vorderteil (21a), das die Form einer Verbindermuffenhälfte, einem zentralen Teil (21b) mit einem Anschlagkörper (23) in Form einer Anschlagkörperhälfte der Verbindermuffe und einem hinteren Teil (22) für die Zentrierung der Faser, das vorzugsweise eine Ausnehmung in Form einer Keilnut (25) aufweist, besteht, daß man eine Voreinstellung mit dem Kaliber durchführt, indem die optische Faser (130) in den hinteren Teil des Kalibers eingelegt wird, daß dann gegen den hinteren Teil des Kalibers das zentrale Kaliberteil mit dem Anschlagkörper angelegt wird, daß der Anschlagkörper in bezug auf die optische Faser unter optischer Kontrolle insbesondere mittels eines Autokollimationsfernrohres (32) zentriert wird, indem die zentralen und hinteren Teile des Kalibers gegeneinander anliegend zueinander verschoben werden, und daß schließlich auf das zentrale Kaliberteil das vordere Kaliberteil aufgesetzt wird.

10. Verfahren nach einem der Ansprüche 6 bis 8, dadurch gekennzeichnet, daß man ein aus einem Stück bestehendes Kaliber verwendet.

11. Verfahren zum Zusammenbau einer Verbindung nach einem der Ansprüche 1 bis 5, dadurch gekennzeichnet, daß in eine bolzenförmige Halterung eine optische Faser eingeführt und mittels einer mechanischen Sperre (48 ; 49) in der Halterung fixiert wird, daß das Ende der Faser axial in bezug auf die bolzenförmige Halterung eingestellt wird, indem das gesamte in ein Kaliber eingeführt wird, welches einen Anschlagkörper in Form einer Anschlagkörperhälfte der Verbindermuffe aufweist, daß das Faserende und die Halterung bis zum Erreichen eines vorgegebenen Abstandes vom Zentrum des Anschlagkörpers des Kalibers durch Trennschleifen und Polieren bearbeitet wird, daß dann die Halterung mit der optischen Faser in ein zweites Kaliber eingesetzt wird, das die Form einer Verbindermuffe hat und einen Anschlagkörper (52) aufweist, der die Form eines Anschlagkörpers einer Verbindermuffe hat, daß die optische Faser in bezug auf den Anschlagkörper durch optische Kontrolle, insbesondere mit einem Autokollimationsfernrohr (32) zentriert wird, indem die mechanische Sperrung verstellt wird, und daß schließlich zwei derart kalibrierte bolzenförmige Halterungen in eine Verbindermuffe eingeführt werden, bis ein Kontakt der Anschlagflächen der Halterungen mit den Anschlagflächen des Anschlagkörpers der Verbindermuffe stattfindet.

12. Verfahren nach Anspruch 11, dadurch gekennzeichnet, daß die mechanische Sperre aus einer Mehrzahl von Metallkugeln (48) besteht, die unter Kraftwirkung in Bohrungen (47) der bolzenförmigen Halterung gelagert sind, wobei die Kugeln gegen ein zentrales metallisches Rohr (49) andrückbar sind, das einen Durchgang aufweist, in den eine Faser, insbesondere durch Kleben fixiert wird, und daß das Metallrohr den rohrförmigen axialen Ansatz der bolzenförmigen Halterung bildet.

Fig:1

Fig:2

0 063 085

*Fig:3*

*Fig:4*

*Fig:5*

*Fig:6*

0 063 085

*Fig. 7*

*Fig. 8*

*Fig. 9*

*Fig. 10*

3

Fig.11

Fig.12

Fig.14

Fig.13

*Fig:15*

*Fig:16*